# EUROPEAN PATENT SPECIFICATION

(11) **EP 4 149 207 B1**
(45) Date of publication and mention of the grant of the patent: **06.11.2024**
(21) Application number: 22194789.8
(22) Date of filing: 09.09.2022
(51) Int. Cl.: H05B 6/42, H05B 6/14

(54) **APPARATUS FOR INDUCTIVELY HEATING METALLIC BODIES WITH IMPROVED COOLING, AND METHOD FOR COOLING SUCH AN APPARATUS**
VORRICHTUNG ZUM INDUKTIVEN ERWÄRMEN METALLISCHER KÖRPER MIT VERBESSERTER KÜHLUNG UND VERFAHREN ZUM KÜHLEN EINER SOLCHEN VORRICHTUNG
APPAREIL DE CHAUFFAGE PAR INDUCTION DE CORPS MÉTALLIQUES AVEC REFROIDISSEMENT AMÉLIORÉ ET PROCÉDÉ DE REFROIDISSEMENT D'UN TEL APPAREIL

(30) Priority: 10.09.2021 IT 202100023498
(43) Date of publication of application: 15.03.2023
(73) Proprietor: Albatros Trade S.r.l., 54033 Carrara (MS) (IT)
(72) Inventor: FRATI, Nicola, I-55041 CAMAIORE (LU) (IT); BERTI, Massimo, I-54033 CARRARA (MS) (IT)
(74) Representative: ABM Agenzia Brevetti & Marchi

(56) References cited:
- WO-A1-2017/186963
- US-A- 3 022 368
- US-A- 4 576 009
- US-A- 5 239 916
- US-B2- 10 629 356

## Description

### Scope of the invention

The present invention relates to an improved apparatus for inductively heating metal bodies, i.e., an apparatus configured to irradiate a metal body with a variable electromagnetic field, thereby causing eddy currents to circulate in the metal body and to heat the same by Joule effect. In particular, the invention relates to an improved cooling method for cooling such an apparatus.

### Description of the prior art

Apparatuses are known for inductively heating metal bodies, in particular, metal workpieces to be worked at high temperature.

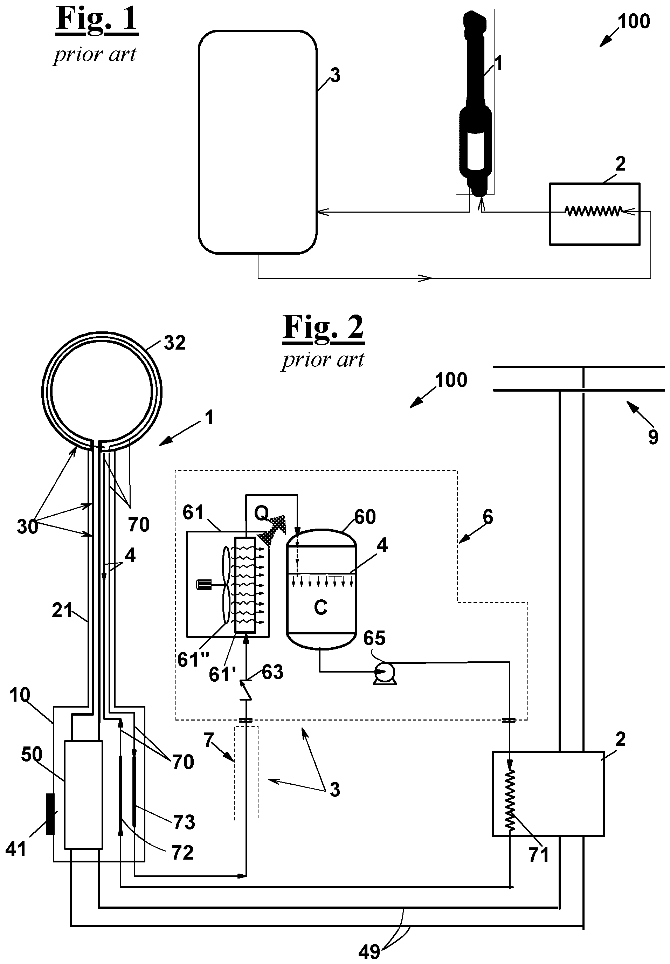

As shown in Fig. 1, a conventional apparatus 100 for inductively heating metal bodies basically comprises a handpiece 1, i.e. a device arranged to be grasped by an operator, an electric generation unit 2 and a hydraulic circuit 3 through which a cooling liquid is caused to circulate.

More in detail, as shown in Fig. 2, handpiece 1 comprises a hollow handle portion 10, an elongated support 21 extending from hollow handle portion 10, and at least one inductor winding element 32 arranged at one end of elongated support 21 opposite to hollow handle portion 10. Inductor winding element 32 can have a shape depending on the metal body to be heated and is a part of an electric inductor circuit 30. Electric inductor circuit 30 is electrically powered by a current transformer 50 and is normally enclosed within hollow handle portion 10.

Electric generation unit 2 is arranged to receive a voltage from an electrical grid 9. Electric generation unit 2 is electrically connected to a current transformer 50 and is configured to supply an alternating current to current transformer 50, which is in turn arranged to supply an alternating working current to electric inductor circuit 30.

Hydraulic circuit 3 has a volume large enough to contain a predetermined amount of a cooling liquid 4. Normally, cooling liquid 4 is water suitably treated for use at high temperatures. Moreover, hydraulic circuit 3 includes a cooling portion 7 to maintain the temperature of handpiece 1 below a predetermined value, and a cooled portion 6 to limit the temperature increase of cooling liquid 4 due to the heat received from handpiece 1 in cooling portion 7.

Cooling portion 7 comprises a cooling passageway 70 defined within handpiece 1, in particular within inductor winding element 32 and hollow handle portion 10, in order to at least partially remove the heat generated by the current circulating in electric inductor circuit 30 and in the windings of transformer 50. In order to cool down the latter, heat exchange elements 72 and 73 can be provided within handle portion 10, or at least heat exchange portions 72, 73 of cooling passageway 70 can be configured to exchange heat with the internal parts of handle portion 10. Cooling passageway 70 also allows removing the heat that inductor winding element 32 receives from the inductively heated body. Normally, cooling portion 7 also includes a heat exchange element 71 arranged in electric generation unit 2 for cooling, in particular, an IGBT bridge enclosed therein. Heat exchange elements or portions 71, 72 and 73 are usually serially arranged with respect to one another.

Cooled portion 6 includes a heat exchanger 61 for cooling down cooling liquid 4, by removing a thermal power Q therefrom. Normally heat exchanger 61 is an air-cooled exchanger including an air-cooled exchanger element 61', within which cooling liquid 4 circulates, and an air conveyor device such as a fan 61" is arranged to convey external air on a heat exchange surface of air-cooled exchanger element 61'. Hydraulic circuit 3 advantageously includes a check valve 63.

Cooled portion 6 further comprises a reservoir 60 having a volume C, so as to contain a predetermined amount of cooling liquid 4, and a pump 65 for causing cooling liquid 4 to circulate through cooling circuit 3.

The induction cooling equipment described so far is mentioned, for instance, in US3495063, US3022368, WO2017186963.

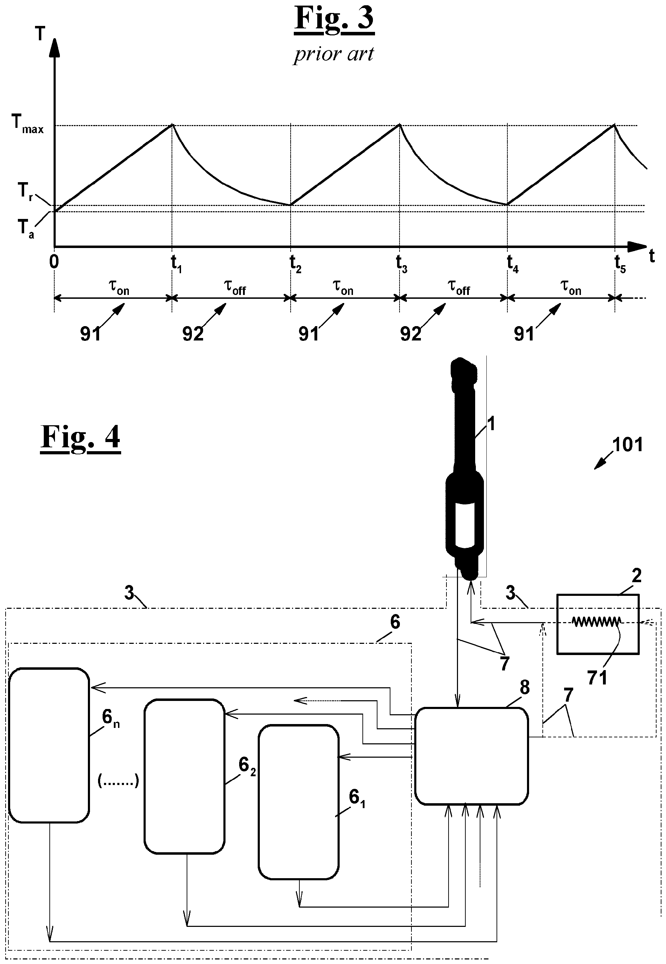

Volume C of reservoir 60 and thermal power Q that can be removed by heat exchanger 61 are selected considering that the temperature of portable device 1 and the electronics of electric generation unit 2 must not exceed maximum admissible values while containing the size of the apparatus, in particular, of cooling circuit 3. These opposite constraints lead to a trade-off solution, as schematically indicated in Fig. 3. The diagram of Fig. 3 shows how an operating temperature T of the apparatus, for example the temperature T of cooling liquid 4 as available at the inlet of heat exchange element 71, changes with time t. In Fig. 3, Tₐ is the temperature of the cooling liquid at the beginning of a cooling operation, Tₘₐₓ is a predetermined maximum cooling liquid temperature. Upon reaching temperature Tₘₐₓ, electric generation unit 2 is configured to automatically stop the power supply to current transformer 50 while cooling liquid 4 is being heated. While cooling liquid 4 is being cooled, when the cooling liquid temperature becomes equal or lower than a predetermined temperature Tᵣ, electric generation unit 2 is configured to enable the power supply to current transformer 50 to be restored.

Considering the above-mentioned size and safety constraints, volume C and thermal power Q are selected in such a way that a single working step 91, during which the workpiece is heated, can go on for a continuous working time τ_{ON} long enough to attain the workpiece temperature required to safely perform such common tasks as unscrewing a bolt.

However, in some instances, a heating time longer than allowable continuous working time τ_{ON} may be required to reach the target temperature. This is the case, for example, when the edges of two metal plates must be joined together, e.g., by brazing. Such a heating operation cannot be concluded in a single working or heating step 91, and intermediate inactivity steps 92 must be provided lasting at least a recovery time τ_{OFF} long enough to allow cooling liquid 4 to be cooled from Tₘₐₓ to Tᵣ. These intermediate steps remarkably reduce the productivity of these induction heating devices, which could even result useless for some applications.

It should be considered that both working time τ_{ON} and recovery time τ_{OFF} cannot be uniquely predicted for of such an apparatus 100, as they largely depend on the surrounding temperature and other environment conditions, on the temperature at which the cooling liquid is available, and on the working cycle itself.

### Summary of the invention

It is therefore an object of the present invention to provide an apparatus for inductively heating metal bodies and a cooling method for said apparatus which allow a continuous working time that is significantly longer than what is possible in the prior art, without exceeding a predetermined maximum cooling liquid temperature.

It is also an object of the invention to provide an apparatus that allows such an extension of the continuous working time without significantly increasing the size of the apparatus in comparison with the prior art.

The above-mentioned objects are achieved by an apparatus for inductively heating metal bodies as defined in claim 1, and by a cooling method for such an apparatus as defined in claim 9, respectively. Advantageous embodiments and modifications of the apparatus and of the method are defined in the respective dependent claims.

According to one aspect of the invention, an apparatus for inductively heating metal bodies comprises:
- a handpiece arranged to be grasped by an operator, the handpiece including:
   - a hollow handle portion;
   - an elongated support extending from the hollow handle portion;
   - an electric inductor circuit comprising at least one inductor winding element that is arranged at an end portion of the elongated support;
   - a current transformer arranged in the handle portion and electrically connected with the electric inductor circuit;
- an electric generation unit electrically connected to the current transformer, and configured to supply an alternating current to the electric inductor circuit through the current transformer;
- a hydraulic circuit of a cooling liquid comprising:
   - a cooling portion, defined within the handpiece, for cooling the hollow handle portion and the at least one inductor winding element;
   - a cooled portion having a volume to contain a predetermined amount of cooling liquid;
   wherein:
   - the cooled portion of the hydraulic circuit includes a plurality of parallel-arranged branches, i.e., a plurality of cooling sections arranged in parallel to one another, said branches or sections including respective reservoirs,
   - the volume of the cooled portion is split into substantially equal parts among the reservoirs,
   - the parallel-arranged branches comprise respective temperature sensors configured to detect and notify respective temperature values of the cooling liquid contained in the reservoirs, and
   - the cooled portion of the hydraulic circuit further comprises a switching valve unit configured to selectively put each of the parallel-arranged branches of the cooled portion into hydraulic connection with the cooling portion of the hydraulic circuit.

According to another aspect of the invention, a method for cooling an apparatus for performing an induction heating process of a metal body, said process comprising steps of:
- prearranging an apparatus as defined above;
- defining a maximum temperature of the cooling liquid;
- positioning the metal body and at least one hollow inductor winding element proximate to each other;
- hydraulically connecting one branch of the parallel-arranged branches of the cooled portion with the cooling portion of the cooling circuit, the connected branch being an active branch of the cooled portion;
- starting a closed-circuit conveying of the cooling liquid between the active branch and the cooling portion of the cooling circuit;
- starting an electric supply of the electric inductor circuit, wherein an amount of heat generated by electric currents circulating in the windings of the transformer and in the inductor winding element, and an amount of heat transferred by the heated metal body to the inductor winding element is at least in part removed by the cooling liquid circulating in the cooling portion of the cooling circuit;

so as to perform a step of heating the metal body,
in the cooling method, during the step of heating the metal body, at predetermined time intervals, the steps being provided of:
   - detecting a temperature value of the cooling liquid contained in the active branch;
   - comparing the detected temperature value of the cooling liquid with the maximum temperature;
if the detected temperature value of the cooling liquid is equal to or higher than the maximum temperature,
   - switching the active branch to a different branch selected among the parallel-arranged branches of the cooled portion of the circuit,
wherein a step is also provided of
   - checking the presence of a heating-stop condition;
and, in the presence of the heating-stop condition,
   - discontinuing the electric power supply;
   - moving the metal body and the at least one inductor winding element away from each other.

This way, the cooling portion of the hydraulic circuit is selectively supplied with the cooling liquid coming from the reservoir of a different branch when the temperature of the cooling liquid supplied by the branch that is currently hydraulically connected with the cooling portion exceeds a predetermined maximum temperature, after a certain operating time.

This way, the continuous operating time can be extended with respect to what is allowed by prior art apparatuses, in which the cooling circuit has a single volume or reservoir of cooling liquid permanently hydraulically connected with the cooling portion of the circuit itself. The inventors have in fact realized that this way the availability of liquid at a temperature low enough to effectively cool the hollow handle portion, and possibly the power electronics, is guaranteed for a considerably longer continuous time than in the case in which all the available cooling liquid is circulated permanently in the cooling portion of the circuit, even without proportionally increasing the overall amount of liquid contained in the hydraulic circuit.

Thanks to the invention, it is possible to continuously carry out prolonged heating operation such as heating extended portions of metal pieces, for example edges of sheets to be joined together by brazing, or the sequential heating of several threaded joints such as bolts to be unscrewed to disassemble a complex assembly of metal pieces. More generally, if more than one cooling units are provided, within the limits of the resulting overall dimensions, the equipment can be adapted to the needs of different production cycles, without using a plurality of prior art induction heating units or introducing a refrigeration machines to refrigerate the cooling fluid, which would be too expensive and/or environmentally objectionable.

Another advantage of the apparatus and of the method according to the invention is that, if a fault occurs in one of the parallel cooling branches, the apparatus can in any case continue to operate, albeit with reduced performance, until the faulty branch has not been repaired.

In an advantageous embodiment, the apparatus further comprises a control unit configured to perform the method automatically, in particular, this control unit is configured to:
- detect a temperature signal from the temperature sensors arranged in the reservoirs or somewhere else in the branches of the cooled portion of the hydraulic circuit and,
- if the temperature signal indicates that the temperature of the cooling liquid supplied by an active branch of the parallel-arranged branches, i.e. from a branch currently in hydraulic connection with the cooling portion, exceeds the maximum temperature, operate the switching valve unit, in such a way to put a different branch into hydraulic connection with the cooling portion of the hydraulic circuit.

This way, the continuous operating time can be extended without the operator having to directly check the temperature of the cooling liquid and to manually switch the active branch from the branch currently in use into a different branch, i.e., without having to put the latter into hydraulic connection with the cooling portion of the hydraulic circuit instead of the branch currently in use.

In some embodiments, the cooled portion of the hydraulic circuit comprises a number of parallel-arranged branches larger than two, and the method includes a step of selecting a branch, different from the currently active one, to be turned into the active branch, i.e., to be put into hydraulic connection with the cooling portion of the hydraulic circuit, when the temperature of the cooling liquid coming from the currently active branch becomes higher than the maximum temperature. In this case, the control unit is configured to take this decision, for instance, by selecting the branch containing the cooling liquid at the lowest temperature among the parallel-arranged inactive branches as the new active branch. This further increases the cooling power of the device beyond the improvement obtained by dividing the amount of cooling liquid into multiple amounts and using these amounts of cooling liquid one after the other.

Advantageously, the parallel-arranged branches of the cooled portion of the hydraulic circuit comprise, in addition to the respective reservoirs, respective heat exchangers for cooling the cooling liquid. Preferably, each of the reservoirs and each of the heat exchangers are arranged to maintain the cooling of the cooling liquid even while the respective branch is not active, that is, even while the respective branch is not hydraulically connected with the cooling portion of the hydraulic circuit.

This way, the cooling rate of the liquid contained in the reservoirs of the single branches is increased, while the latter are not active. Therefore, a cooling liquid cold enough to effectively cool the handpiece and possibly the power electronics of the apparatus can be available in a shorter time. This makes it possible to further extend the maximum continuous cooling time and / or to reduce the number of parallel-arranged branches of the cooled portion of the hydraulic circuit, under a same with the same maximum continuous cooling time.

Advantageously, the parallel-arranged branches of the cooled portion of the hydraulic circuit comprise, in addition to the respective reservoirs, respective pumps for supplying the cooling portion of the hydraulic circuit with the cooling liquid.

In this case, a recycle duct between the switching valve unit and an inlet of the respective reservoir can be provided in each parallel arranged branch of the cooling portion, and the above-mentioned heat exchanger can be connected along the recycle duct. In one embodiment, the heat exchanger can be a forced-air heat exchanger, in which a device such as a fan is arranged to convey air onto the external surface of a heat exchange element such as a radiator, within which the cooling liquid is caused to flow. Forced-air heat exchangers can be provided at relatively low cost and are relatively easy to instal and to maintain.

In an advantageous embodiment, the control unit, when the temperature signal indicates that the temperature of the cooling liquid supplied by the active branch exceeds the maximum temperature, is further configured to operate the switching valve unit, in such a way to put the pump of the previously active branch into hydraulic connection with the recycle duct instead of with the cooling portion of the circuit, causing the liquid of each branch to recirculate to the respective reservoir and to be cooled even when the branch is not active, i.e. even when the branch is not hydraulically connected with the cooling portion of the hydraulic circuit.

As an alternative, the heat exchangers can be integrated to the respective reservoirs. In other words, the heat exchangers can comprise heat exchange elements arranged within the reservoirs and submerged by the cooling liquid contained therein, for instance, cooling coils arranged to convey cold water such as well water, if available, which could not be directly used in the hydraulic circuit of the apparatus.

The cooling portion of the hydraulic circuit may further comprise a heat exchange element of the electric generation unit, in particular, for maintaining the temperature of an IGBT bridge of the electric generation unit below a predetermined maximum temperature value.

### Brief description of the drawings

Further features and / or advantages of the present invention will become clearer with the following description of exemplary embodiments and modifications, exemplifying but not limitative, with reference to the attached drawings, in which:
- Fig. 1 is a block diagram of an apparatus for inductively heating metal bodies, according to the prior art;
- Fig. 2 is a diagram showing more in detail the structure of the portable inductor device and of the cooling circuit of the apparatus of Fig. 1;
- Fig. 3 is a diagram showing how the temperature of the cooling liquid in an apparatus as in Figs. 1 and 2 qualitatively changes with time;
- Fig. 4 is a block diagram of an apparatus for inductively heating metal bodies, according to the invention;
- Fig. 5 is a diagram showing more in detail the structure of the portable inductor device and of the cooling circuit of the apparatus of Fig. 4, according to one exemplary embodiment of the invention;
- Fig. 6 is a diagram of an apparatus for inductively heating metal bodies according to another exemplary embodiment of the invention, in which the active branches and inactive branches of the cooled portion of the hydraulic circuit are switched automatically;
- Fig. 7 is a diagram of an apparatus according to a further embodiment of the invention, in which each cooling circuit includes a heat exchanger and a pump;
- Fig. 8 is a diagram of an apparatus according to a still further embodiment of the invention, in which each cooling circuit is configured to perform a cooling step of the cooling liquid within the respective reservoir even while this reservoir is not supplying cooling water to the cooling portion of the hydraulic circuit;
- Fig. 9 is a diagram schematically showing how the temperature of the cooling liquid contained in the reservoirs of the respective cooling circuits of the apparatus of Fig. 7, for instance, changes with time;
- Fig. 10 shows a flow chart of the method for cooling an apparatus for inductively heating metal bodies according to the invention.

### Description of some preferred embodiments

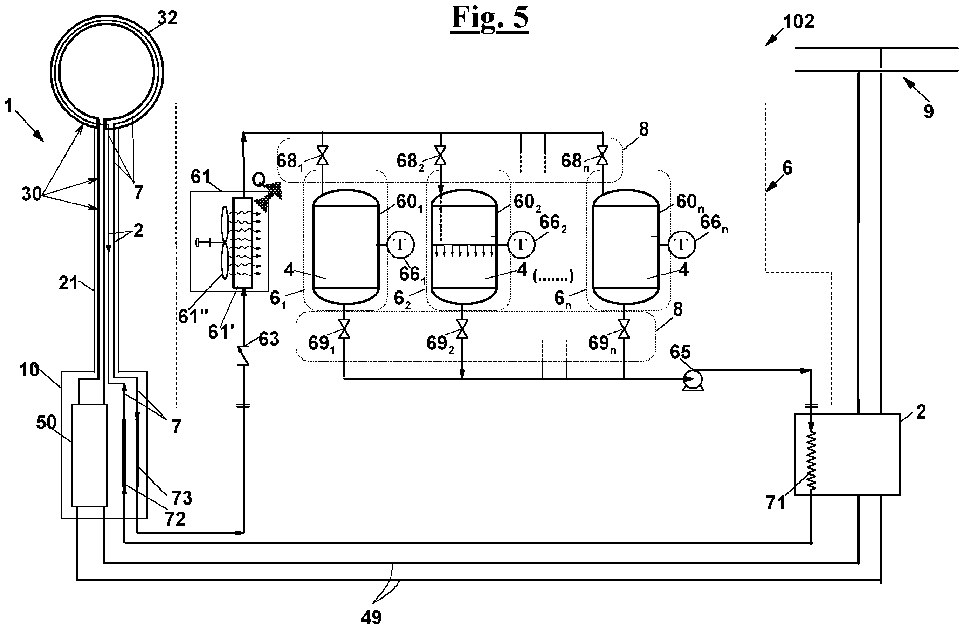

With reference to Figs. 4 and 5, an apparatus 101 for inductively heating metal bodies is described, according to an exemplary embodiment of the invention. Apparatus 101 comprises a handpiece 1, i.e. a device arranged to be grasped by an operator, an electric generation unit 2 and a hydraulic circuit 3 comprising a cooling portion 7 to cool handpiece 1 with a cooling liquid 4, preferably water suitably treated to exchange heat at high temperatures.

Handpiece 1, electric generation unit 2 and cooling portion 7 of hydraulic circuit 3 have the same features as the corresponding parts of prior art device 100 already described with reference to Fig. 2, therefore their description will not be repeated.

As shown by the dashed line, cooling portion 7 of hydraulic circuit 3 can comprise, in addition to cooling passageway 70 within handpiece 1 (Fig. 2), a heat exchange element 71 arranged to remove heat from some components of power generation unit 2, in order to prevent them to be overheated to such an extent that they could not properly work or could be damaged. This is the case, for instance, of an IGBT bridge that may be included in power generation unit 2.

According to the invention, hydraulic circuit 3 has a cooled portion 6 which comprises a plurality of n parallel-arranged branches 6₁,6₂,...6ₙ, i.e., a plurality of n cooling sections arranged in parallel to one another, with respect to cooling portion 7. Parallel-arranged branches 6₁,6₂,...6ₙ comprise respective reservoirs 60₁,60₂,...60ₙ having substantially the same volume or capacity, so that the overall volume of cooled portion 6 of hydraulic circuit 3 is split into substantially equal parts among parallel-arranged branches 6₁,6₂,...6ₙ.

With reference to Fig. 5, parallel-arranged branches 6₁,6₂,...6ₙ further include respective temperature sensors 66₁,66₂,...66ₙ, preferably mounted on reservoirs 60₁,60₂,...60ₙ, in order to detect and notify respective temperatures T₁, T₂,...Tₙ of cooling liquid 4 contained in reservoirs 60₁,60₂,...60ₙ. Temperature sensors 66₁,66₂,...66ₙ are advantageously associated with local temperature indicators, not shown, that can be observed by an operator who is using handpiece 1.

Still according to the invention, cooled portion 6 of hydraulic circuit 3 includes a switching valve unit 8 configured to selectively put each of parallel-arranged branches 6₁,6₂,...6ₙ of cooled portion 6 into hydraulic connection with cooling portion 7 of hydraulic circuit 3. More in detail, in the embodiment shown in Fig. 5, switching valve unit 8 comprises a first plurality of shut-off valves 68₁,68₂,...68ₙ at the inlet of respective reservoirs 60₁,60₂,...60ₙ and a second plurality of shut-off valves 69₁,69₂ ,...69ₙ at the outlet of respective reservoirs 60₁,60₂,...60ₙ.. A check valve 63 is also advantageously included in hydraulic circuit 3.

This way, through pump 65, already described with reference to Fig. 2, any of parallel-arranged branches 6_{i,} i = 1,2...n can be put into hydraulic connection with cooling portion 7 of hydraulic circuit 3, while all other branches 6_{j,} j ≠ i are not hydraulically connected with cooling portion 7. Therefore, it is possible to selectively supply cooling portion 7 with cooling liquid 4 contained in a single reservoir 60ᵢ of a respective branch 6ᵢ, i = 1.2...n.

In particular, when temperature Tᵢ of cooling liquid 4 of a currently active branch 6_{i,}, i.e. a branch being hydraulically connected with cooling portion 7 of hydraulic circuit 3, becomes equal to or higher than a predetermined maximum temperature Tₘₐₓ due to the heat removed from handpiece 1, the temperature sensors and indicators enable an operator to switch valves 68₁,68₂,...68ₙ and 69₁,69₂,...69ₙ of the switching valve unit 8 to hydraulically disconnect reservoir 60ᵢ / branch 6_{i,} from cooling portion 7, and to put a different reservoir 60ⱼ / a different branch 6_{j,} j ≠ i into hydraulic connection with cooling portion 7, so as to supply cooling portion 7 with cooling liquid 4 contained in this reservoir 60ⱼ, at a temperature Tⱼ lower than Tᵢ, and therefore lower than maximum temperature Tₘₐₓ, since this water has not received the heat generated in handpiece 1, until the switching.

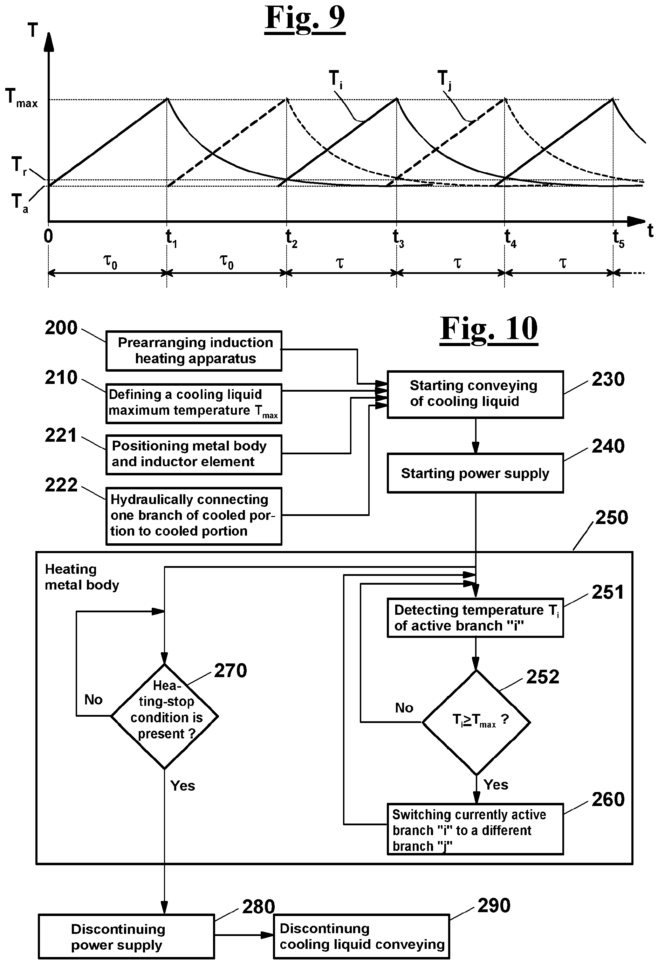

The diagram of Fig. 9 shows how temperature T of cooling liquid 4 being supplied to cooling portion 7 changes with time. In this diagram, each curve shows the temperature Tᵢ, Tⱼ of cooling liquid 4 contained in a given reservoir 60_{i,} 60_{j.} A bold line style is used to indicate when this liquid is being supplied to cooling section 7, while a thin line style indicates when the same liquid is not being supplied to cooling section 7 of hydraulic circuit 3. The times t₁, t₂... t₅ are the times at which a switch occurs between branches 6₁,6₂,...6ₙ of cooled portion 6 in the connection with cooling portion 7.

With reference to Fig. 5, cooled portion 6 of hydraulic circuit 3 comprises at least one heat exchanger 61 to remove heat from at least the portion of cooling liquid 4 which is currently supplied to cooling portion 7 of hydraulic circuit 3. Exchanger 61 is represented in Fig. 5 as an air exchanger, including an air-cooled exchanger element 61' configured to convey cooling liquid 4, and a fan 61" or any equivalent device arranged to convey air onto the external surface of air-cooled exchanger element 61'. However, a heat exchanger of a different type can be used, such as a double pipe heat exchanger or a plate heat exchanger, cooled by a stream of a cold liquid such as well water, if available.

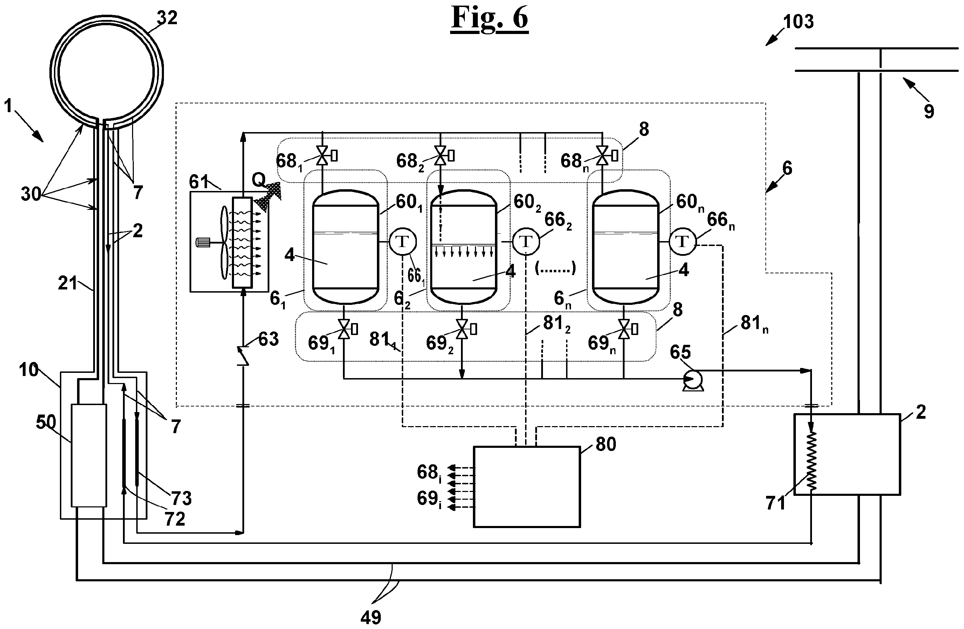

As shown in Fig. 6, an apparatus 103, according to another embodiment of the invention, comprises a control unit 80 configured to receive temperature signals from temperature transmitters, not shown, associated with temperature sensors 66₁,66₂,...66ₙ. Moreover, when the temperature signal coming from temperature sensor 66ᵢ of active branch 6ᵢ indicates that temperature Tᵢ of cooling liquid 4 contained therein becomes equal to or higher than maximum temperature Tₘₐₓ, control unit 80 is configured to operate switching valve unit 8 in such a way to hydraulically disconnect currently active branch 6ᵢ from cooling portion 7, and to put a different branch 6_{j,} j ≠ i into hydraulic connection with cooling portion 7.

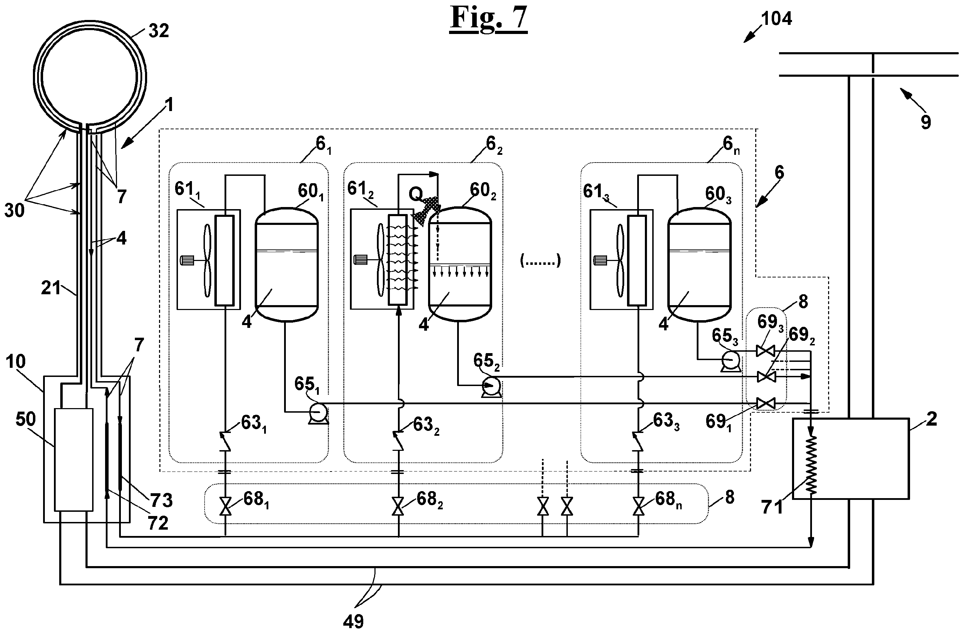

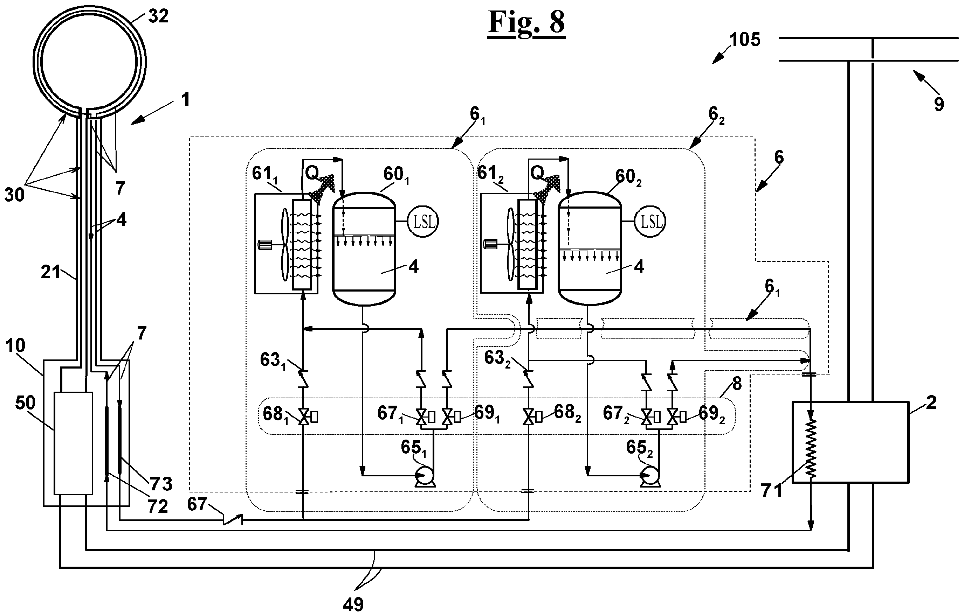

Apparatus 103 allows automatically switching branches 6₁, 6₂, 6₃,...6ₙ, in the hydraulic connection with cooling portion 7 of hydraulic circuit 3, in other words apparatus 103 is configured to actuate the method for cooling an apparatus for inductively heating metal bodies described later. The specific feature of this embodiment, i.e. the presence of such a control unit 80 can obviously be extended to apparatuses 104 and 105 according to further embodiments of the invention, described hereinafter in connection to Figs. 7 and 8.

In various embodiments, cooled portion 6 of hydraulic circuit 3 includes a number of parallel-arranged branches 6₁,6₂,...6ₙ larger than two, and the method includes a step of selecting a new active branch 6ₖ, i.e. a branch 6ₖ different from currently active branch 6_{i,} to be exchanged with currently active branch 6ᵢ, i.e. to be put into hydraulic connection with cooling portion 7 of hydraulic circuit 3 instead of branch 6ᵢ when temperature Tᵢ of the cooling liquid supplied by currently active branch 6ᵢ becomes equal to or higher than maximum temperature Tₘₐₓ. In this case, control unit 80 is configured to take this decision, for example, by selecting the branch 6ₖ that contains cooling liquid 4 at the lowest temperature among parallel non-active branches 6ⱼ, j ≠ i. This further increases the cooling power of the device beyond the improvement obtained by dividing the amount of cooling liquid into multiple amounts and using these amounts of cooling liquid one after the other.

In some embodiments not shown, parallel-arranged branches 6₁,6₂,...6ₙ include, in addition to reservoirs respective heat exchangers 61₁,61₂,...61ₙ to cool cooling liquid 4, and / or respective pumps 65₁,65₂ ,...65ₙ for supplying cooling liquid 4 to cooling portion 7 of hydraulic circuit 3. In particular, Fig. 7 shows an apparatus 104, according to an embodiment of the invention, in which each parallel-arranged branch 6ⱼ, j=1...n includes both a heat exchanger 61ⱼ and a pump 65ⱼ.

In these cases, the shut-off valves 68₁,68₂,...68ₙ at the inlet of branches 6₁,6₂,...6ₙ are arranged upstream of respective exchangers 61₁,61₂,...61ₙ, and / or shut-off valves 69₁,69₂,...69ₙ at the outlet of branches 6₁,6₂,...6ₙ are arranged on the delivery pipes of respective pumps 65₁,65₂,...65ₙ.

Fig. 8 relates to an apparatus 105, according to a further embodiment of the invention, in which parallel-arranged branches 6₁,6₂ of cooled portion 6 of hydraulic circuit 3 comprise respective recycle ducts between switching valve unit 8, in this case between respective shut-off valves 67₁,67₂ arranged at the delivery side of pumps 65₁,65₂, and the inlet of respective reservoirs 6₁,6₂. Heat exchangers are mounted along these recycle ducts, in particular heat exchangers 61₁,61₂ are forced-air heat exchangers, as discussed above.

In particular, a control unit such as control unit 80 of apparatus 103 of Fig. 6 can be provided in apparatus 105 of Fig. 8, further configured, when temperature signal 81ᵢ indicates that temperature Tᵢ of cooling liquid 4 supplied by currently active branch 6ᵢ becomes equal or exceeds maximum temperature Tₘₐₓ, to operate switching valve unit 8, in particular to close valves 68ᵢ, 69ᵢ and to open valve 67ᵢ, in such a way to put respective pump 65ᵢ of previously active branch 6ᵢ into hydraulic connection with the recycle duct so as to cool liquid 4 contained in heat exchanger 61ᵢ.

Apparatus 105 of Fig. 8 makes it possible to cool liquid 4 of each parallel-arranged branch 6₁,6₂,...6ₙ even when the latter is not hydraulically connected and is not supplying cooling water 4 to cooling portion 7 of hydraulic circuit 3.

However, this is also possible in an apparatus, not shown, in which heat exchangers 61₁,61₂,...61ₙ are integrated to reservoirs in the form of heat exchange elements arranged inside or even integral to the wall of reservoirs such as cooling coils configured to be connected to a circuit conveying cold water. This cold water can be well water, if available, which could not be directly used in hydraulic circuit 3 of the apparatus.

In apparatus 105 of Fig. 8, cooled portion 6 of hydraulic circuit 3 includes only two branches 6₁,6₂ for the sake of clarity and simplicity. However, such an embodiment can obviously be extended to the case of any number n of parallel-arranged branches 6₁,6₂,...6ₙ, as in the exemplary embodiments previously described in connection with Figs. 4-7.

Finally, a method for cooling an induction heater apparatus is described with reference to Fig. 10.

This method includes preliminary steps of prearranging 200 an induction heating apparatus as described with reference to Figs. 5-8, of defining 210 a maximum temperature Tₘₐₓ of cooling liquid 4, of positioning 221 the at least one inductor winding element 32 and the metal body to be heated close to each other, and of hydraulically connecting 222 one branch 6ᵢ selected among parallel-arranged branches 6₁,6₂,...6ₙ of cooled portion 6 with cooling portion 7 of cooling circuit 3.

Once these preliminary steps 200,210,221,222 have been carried out, a step 230 is provided of starting conveying cooling liquid 4 through hydraulic circuit 3, more precisely through active branch 6ᵢ and cooling portion 7, as well as a step 240 of starting electrically supplying electric inductor circuit 30, so that a step 250 of heating the metal body takes place.

During step 250 of heating the metal body, an amount of heat generated by electric currents circulating in the windings of transformer 50, in inductor winding element 32 and in the conductors of handpiece 1 is at least in part removed by cooling liquid 4 circulating through cooling portion 7 of cooling circuit 3, as well as an amount of heat transferred by the metal body being heated to inductor winding element 32.

Moreover, during step 250 of heating the metal body, steps are cyclically performed, at predefined time intervals, of detecting 251 temperature Tᵢ of cooling liquid 4 contained in active branch 6_{i,} and, subsequently, of comparing 252 a detected temperature Tᵢ of cooling liquid 4 with preliminarily defined maximum temperature Tₘₐₓ, step 210. If detected temperature Tᵢ of cooling liquid 4 becomes equal to or higher than maximum temperature Tₘₐₓ, the cycle consisting of detection and comparison steps 251, 252 is discontinued, and a step 260 is performed of switching the active branch from currently active branch 6ᵢ to a different branch 6ⱼ selected among the parallel-arranged branches of cooled portion 6 of hydraulic circuit 3.

Moreover, during step 250 of heating the metal body, at predefined time intervals, a step 270 of checking the presence of a heating-stop condition is carried out. The heating-stop signal can be generated by a heating-stop switch 41 (Fig. 5), operated by the operator who is using handpiece 1. If such a heating-stop condition is detected, the corresponding verification cycle is discontinued, and a step 280 is also carried out of discontinuing the power supply. Then, a step 290 can also be performed, preferably after a predetermined delay time, of discontinuing the flow of cooling liquid 4 through hydraulic circuit 3. Finally, a step takes place of moving the metal body and the at least one inductor winding element away from each other.

As anticipated when describing Figs. 5 and 6, steps 251, 252 of detecting and comparing temperature Tᵢ of cooling liquid 4 supplied by active branch 6ᵢ, and possibly also step 260 of switching the active branch can be carried out manually by the operator who is using handpiece 1, or automatically by a control unit 80 configured to receive a temperature signal generated by temperature sensor 66ᵢ and to output a switching control signal to appropriately operate switching valve unit 8.

The foregoing description of some exemplary specific embodiments will so fully reveal the invention according to the conceptual point of view, so that others, by applying current knowledge, will be able to modify and/or adapt in various applications the specific exemplary embodiments without further research and without parting from the invention, and, accordingly, it is meant that such adaptations and modifications will have to be considered as equivalent to the specific embodiments. The means and the materials to carry out the different functions described herein could have a different nature without, for this reason, departing from the field of the invention. It is meant that the phraseology or terminology that is employed herein is for the purpose of description and not of limitation.

## Claims

1. An apparatus for inductively heating metal bodies, said apparatus comprising:
- a handpiece (1) arranged to be grasped by an operator, said handpiece including:
- a hollow handle portion (10);
- an elongated support (21) extending from said hollow handle portion (10);
- an electric inductor circuit (30) comprising at least one inductor winding element (32) that is arranged at an end portion of said elongated support (21);
- a current transformer (50) arranged in said hollow handle portion (10) and electrically connected with said electric inductor circuit (30);
- an electric generation unit (2) electrically connected to said current transformer (50), and configured to supply an alternating current to said electric inductor circuit (30) through said current transformer (50);
- a hydraulic circuit (3) of a cooling liquid (4), said hydraulic circuit comprising:
- a cooling portion (7), defined within said handpiece (1), for cooling said hollow handle portion (10) and said at least one inductor winding element (32);
- a cooled portion (6) having a volume (C) to contain a predetermined amount of said cooling liquid (4);
**characterized in that** said cooled portion (6) of said hydraulic circuit (3) comprises a plurality of parallel-arranged branches (6₁,6₂,...6ₙ) including respective reservoirs (60₁,60₂,...60ₙ),
**in that** said volume (C) is split into substantially equal parts among said reservoirs (60₁,60₂,...60ₙ),
**in that** said parallel-arranged branches (6₁,6₂,...6ₙ) comprise respective temperature sensors (6₆₁,66₂,...66ₙ) configured to detect and notify respective temperature values (T1, T₂,... Tn) of said cooling liquid (4) contained in said reservoirs (60₁,60₂,...60ₙ),
**and in that** said cooled portion (6) of said hydraulic circuit (3) comprises a switching valve unit (8) configured to selectively put each of said parallel-arranged branches (6₁,6₂,...6ₙ) of said cooled portion (6) into hydraulic connection with said cooling portion (7) of said hydraulic circuit (3),
so as to selectively supply said cooling portion (7) of said hydraulic circuit (3) with said cooling liquid (4) coming from a different reservoir (60ⱼ) of said reservoirs when the temperature (Tᵢ) of said cooling liquid (4) supplied by a branch (61ᵢ, i ≠ j) of said parallel-arranged branches that is currently in hydraulic connection with said cooling portion (7) exceeds a predetermined maximum temperature (Tₘₐₓ).

2. The apparatus according to claim 1, further comprising a control unit (80) configured to:
- detect a temperature signal from said temperature sensors (66₁,66₂,...66ₙ), and
- if said temperature signal indicates that said temperature (Tᵢ) of said cooling liquid (4) supplied by an active branch (61ᵢ) of said parallel-arranged branches that is currently in hydraulic connection with said cooling portion (7) exceeds said maximum temperature (Tₘₐₓ), operate said switching valve unit (8) in such a way to put a different branch (61_{j,} j ≠ i) of said parallel-arranged branches into hydraulic connection with said cooling portion (7) of said hydraulic circuit (3).

3. The apparatus according to claim 1, wherein said parallel-arranged branches (6₁,6₂,...6ₙ) comprise, in addition to said respective reservoirs (60₁,60₂,...60ₙ), respective heat exchangers (61₁,61₂,...61ₙ) for cooling said cooling liquid (4).

4. The apparatus according to claim 3, wherein each of said reservoirs (60₁,60₂,...60ₙ) and each of said heat exchangers (61₁,61₂,...61ₙ) of each branch of said parallel-arranged branches (60₁,60₂,...60ₙ) are arranged to maintain a cooling of said cooling liquid (4) while said each branch is not hydraulically connected with said cooling portion (7) of said hydraulic circuit (3).

5. The apparatus according to claim 1, wherein said parallel-arranged branches (6₁,6₂,...6ₙ) comprise, in addition to said respective reservoirs (60₁,60₂,...60ₙ), respective pumps (65₁,65₂,...65ₙ) for supplying said cooling portion (7) of said hydraulic circuit (3) with said cooling liquid (4).

6. The apparatus according to claims 3 to 5, in which
- said parallel-arranged branches (6₁,6₂,...6ₙ) comprise respective recycle ducts between said switching valve unit (8) and inlets of respective said reservoirs;
- said heat exchangers (61₁,61₂,...61ₙ) are arranged along respective said recycle ducts, in particular said heat exchangers (61₁,612,...61ₙ) are forced-air heat exchangers.

7. The apparatus according claims 2 and 6, wherein said control unit (80), when said temperature signal (81ᵢ) indicates that said temperature (Tᵢ) of said cooling liquid (4) supplied by said active branch (61ᵢ) of said parallel-arranged branches exceeds said maximum temperature (Tₘₐₓ), is further configured to operate said switching valve unit (8) in such a way to put a respective one of said pumps (65₁,65₂,...65ₙ) of said active branch (6ᵢ) into hydraulic connection with said recycle duct, and to maintain a cooling of said cooling liquid (4) of each of said branches while each of said parallel-arranged branches (6₁,6₂,...6ₙ) is not hydraulically connected with said cooling portion (7) of said hydraulic circuit (3).

8. The apparatus according to claim 1, wherein said cooling portion (7) of said hydraulic circuit (3) further comprises a heat exchange element (71) of said electric generation unit (2), in particular, for maintaining the temperature of an IGBT bridge of said electric generation unit (2) below a predetermined temperature value.

9. A cooling method for cooling an apparatus for performing an induction heating process of a metal body, said process comprising a step (200) of prearranging an apparatus comprising:
- a handpiece (1) arranged to be grasped by an operator, said handpiece including:
- a hollow handle portion (10);
- an elongated support (21) extending from said hollow handle portion (10);
- an electric inductor circuit (30) comprising at least one inductor winding element (32) arranged at an end portion of said elongated support (21);
- a current transformer (50) arranged in said hollow handle portion (10) and electrically connected with said electric inductor circuit (30);
- an electric generation unit (2) electrically connected to said current transformer (50), and configured to supply an alternating current to said electric inductor circuit (30) through said current transformer (50);
- a hydraulic circuit (3) of a cooling liquid (4), said hydraulic circuit comprising:
- a cooling portion (7), defined within said handpiece (1), for cooling said hollow handle portion (10) and said at least one inductor winding element (32);
- a cooled portion (6) having a volume (C) to contain a predetermined amount of said cooling liquid (4);
wherein said cooled portion (6) of said hydraulic circuit (3) comprises a plurality of parallel-arranged branches (6₁,6₂,...6ₙ), including respective reservoirs (60₁,60₂,...60ₙ),
wherein said volume (C) is split into substantially equal parts among said reservoirs (60₁,60₂,...60ₙ),
said heating process further comprising the steps of:
- defining (210) a maximum temperature (Tₘₐₓ) of said cooling liquid (4);
- positioning (221) said metal body and said at least one inductor winding element (32) proximate to each other;
- hydraulically connecting (222) one branch (6ᵢ) of said cooled portion (6) with said cooling portion (7) of said cooling circuit (3), said connected branch being an active branch of said cooled portion (6);
- starting (230) a closed-circuit conveying of said cooling liquid between said active branch (6ᵢ) and said cooling portion (7) of said cooling circuit (3);
- starting (240) an electric supply of said electric inductor circuit (30), wherein an amount of heat generated by electric currents circulating in the windings of said transformer (50) and in said inductor winding element (32), and an amount of heat transferred by said heated metal body to said inductor winding element (32) is at least in part removed by said cooling liquid (4) circulating in said cooling portion (7) of said cooling circuit (3);
so as to perform a step (250) of heating said metal body,
in said cooling method, during said step of heating said metal body, at predetermined time intervals, the steps being provided of:
- detecting (251) a temperature value (Tᵢ) of said cooling liquid (4) contained in said active branch (6ⱼ);
- comparing (252) said detected temperature value (Tᵢ) of said cooling liquid (4) with said maximum temperature (Tₘₐₓ);
if said temperature value (Tᵢ) of said cooling liquid (4) is equal to or higher than said maximum temperature (Tₘₐₓ),
- switching (260) said active branch (6ᵢ) to a different branch (6ⱼ) selected among said parallel-arranged branches of said cooled portion (6) of said circuit (3),
wherein a step is also provided of
- checking (270) the presence of a heating-stop condition;
and, in the presence of said heating-stop condition,
- discontinuing (280) said electric supply (240);
- moving said metal body and said at least one inductor winding element (32) away from each other.

## Patentansprüche

1. Vorrichtung zum induktiven Erwärmen von Metallkörpern, wobei die Vorrichtung Folgendes umfasst:
- ein Handstück (1), das angeordnet ist, um durch einen Bediener ergriffen zu werden, wobei das Handstück Folgendes umfasst:
- einen hohlen Griffabschnitt (10);
- eine längliche Stütze (21), die sich von dem hohlen Griffabschnitt (10) erstreckt;
- einen elektrischen Induktorkreislauf (30), der zumindest ein Induktorwicklungselement (32) umfasst, das an einem Endabschnitt der länglichen Stütze (21) angeordnet ist;
- einen Stromtransformator (50), der in dem hohlen Griffabschnitt (10) angeordnet und elektrisch mit dem elektrischen Induktorkreislauf (30) verbunden ist;
- eine Elektrikerzeugungseinheit (2), die elektrisch mit dem Stromtransformator (50) verbunden und konfiguriert ist, um dem elektrischen Induktorkreislauf (30) einen Wechselstrom durch den Stromtransformator (50) zuzuführen;
- einen Hydraulikkreislauf (3) einer Kühlflüssigkeit (4), wobei der Hydraulikkreislauf Folgendes umfasst:
- einen Kühlabschnitt (7), der innerhalb des Handstücks (1) definiert ist, um den hohlen Griffabschnitt (10) und das zumindest eine Induktorwicklungselement (32) zu kühlen;
- einen gekühlten Abschnitt (6) mit einem Volumen (C), um eine vorbestimmte Menge der Kühlflüssigkeit (4) aufzunehmen;
**dadurch gekennzeichnet, dass** der gekühlte Abschnitt (6) des Hydraulikkreislaufs (3) eine Vielzahl von parallel angeordneten Zweigen (6₁,6₂,...6ₙ) umfasst, die jeweilige Behälter (60₁, 60₂,...60ₙ) beinhalten,
**dass** das Volumen (C) in im Wesentlichen gleiche Teile auf die Behälter (60₁,60₂,...60ₙ) aufgeteilt ist,
**dass** die parallel angeordneten Zweige (6₁,6₂,...6ₙ) jeweilige Temperatursensoren (6₆₁, 66₂,...66ₙ) umfassen, die konfiguriert sind, um jeweilige Temperaturwerte (T1, T₂,... Tn) der Kühlflüssigkeit (4), die in den Behältern (60₁, 60₂,...60ₙ) aufgenommen ist, zu erfassen und zu melden,
**und dass** der gekühlte Abschnitt (6) des Hydraulikkreislaufs (3) eine Schaltventileinheit (8) umfasst, die konfiguriert ist, um jeden der parallel angeordneten Zweige (6₁,6₂,...6ₙ) des gekühlten Abschnittes (6) selektiv in Hydraulikverbindung mit dem Kühlabschnitt (7) des Hydraulikkreislaufs (3) zu bringen, um dem Kühlabschnitt (7) des Hydraulikkreislaufs (3) selektiv die Kühlflüssigkeit (4) zuzuführen, die aus einem anderen Behälter (60ⱼ) der Behälter kommt, wenn die Temperatur (Tᵢ) der Kühlflüssigkeit (4), die durch einen Zweig (61ᵢ, i ≠ j) der parallel angeordneten Zweige zugeführt wird, der gerade in Hydraulikverbindung mit dem Kühlabschnitt (7) ist, eine vorbestimmte Maximaltemperatur (Tₘₐₓ) überschreitet.

2. Vorrichtung nach Anspruch 1, ferner umfassend eine Steuereinheit (80), die zu Folgendem konfiguriert ist:
- Erfassen eines Temperatursignals von den Temperatursensoren (66₁,66₂,...66ₙ), und
- wenn das Temperatursignal angibt, dass die Temperatur (Tᵢ) der Kühlflüssigkeit (4), die durch einen aktiven Zweig (61ᵢ) der parallel angeordneten Zweige zugeführt wird, der aktuell in Hydraulikverbindung mit dem Kühlabschnitt (7) ist, die Maximaltemperatur (Tₘₐₓ) überschreitet, Betätigen der Schaltventileinheit (8) auf eine solche Weise, dass sich ein anderer Zweig (61ⱼ, j ≠ i) der parallel angeordneten Zweige in Hydraulikverbindung mit dem Kühlabschnitt (7) des Hydraulikkreislaufs (3) gebracht wird.

3. Vorrichtung nach Anspruch 1, wobei die parallel angeordneten Zweige (6₁,6₂,...6ₙ) zusätzlich zu den jeweiligen Behältern (60₁,60₂,...60ₙ) jeweilige Wärmetauscher (61₁,61₂,...61ₙ) zum Kühlen der Kühlflüssigkeit (4) umfassen.

4. Vorrichtung nach Anspruch 3, wobei jeder der Behälter (60₁,60₂,...60ₙ) und jeder der Wärmetauscher (61₁,61₂,...61ₙ) jedes Zweiges der parallel angeordneten Zweige (60₁,60₂,...60ₙ) angeordnet sind, um eine Kühlung der Kühlflüssigkeit (4) zu halten, während jeder Zweig nicht hydraulisch mit dem Kühlabschnitt (7) des Hydraulikkreislaufs (3) verbunden ist.

5. Vorrichtung nach Anspruch 1, wobei die parallel angeordneten Zweige (6₁,6₂,...6ₙ) zusätzlich zu den jeweiligen Behältern (60₁,60₂,...60ₙ) jeweilige Pumpen (65₁,65₂,...65ₙ) zum Zuführen der Kühlflüssigkeit (4) zu dem Kühlabschnitt (7) des Hydraulikkreislaufs (3) umfassen.

6. Vorrichtung nach den Ansprüchen 3 bis 5, wobei
- die parallel angeordneten Zweige (6₁,6₂,...6ₙ) jeweilige Rückführungskanäle zwischen der Schaltventileinheit (8) und Einlässen der jeweiligen Behälter umfassen;
- die Wärmetauscher (61₁,61₂,...61ₙ) entlang der jeweiligen Rückführungskanäle angeordnet sind, insbesondere die Wärmetauscher (61₁,61₂,...61ₙ) Umluftwärmetauscher sind.

7. Vorrichtung nach Anspruch 2 und 6, wobei die Steuereinheit (80), wenn das Temperatursignal (81ᵢ) angibt, dass die Temperatur (Tᵢ) der Kühlflüssigkeit (4), die durch den aktiven Zweig (61ᵢ) der parallel angeordneten Zweige zugeführt wird, die Maximaltemperatur (Tₘₐₓ) überschreitet, ferner konfiguriert ist, um die Schaltventileinheit (8) auf eine solche Weise zu betätigen, dass eine jeweilige der Pumpen (65₁,65₂,...65ₙ) des aktiven Zweiges (6ᵢ) in Hydraulikverbindung mit dem Rückführungskanal gebracht wird und dass eine Kühlung der Kühlflüssigkeit (4) von jedem der Zweige gehalten wird, während jeder der parallel angeordneten Zweige (6₁,6₂,...6ₙ) nicht hydraulisch mit dem Kühlabschnitt (7) des Hydraulikkreislaufs (3) verbunden ist.

8. Vorrichtung nach Anspruch 1, wobei der Kühlabschnitt (7) des Hydraulikkreislaufs (3) ferner ein Wärmeaustauschelement (71) der Elektrikerzeugungseinheit (2) umfasst, insbesondere zum Halten der Temperatur einer LGBT-Brücke der Elektrikerzeugungseinheit (2) unter einem vorbestimmten Temperaturwert.

9. Kühlverfahren zum Kühlen einer Vorrichtung zum Durchführen eines Induktionserwärmungsprozesses eines Metallkörpers, wobei der Prozess einen Schritt (200) des Voranordnens einer Vorrichtung umfasst, umfassend:
- ein Handstück (1), das angeordnet ist, um durch einen Bediener ergriffen zu werden, wobei das Handstück Folgendes umfasst:
- einen hohlen Griffabschnitt (10);
- eine längliche Stütze (21), die sich von dem hohlen Griffabschnitt (10) erstreckt;
- einen elektrischen Induktorkreislauf (30), der zumindest ein Induktorwicklungselement (32) umfasst, das an einem Endabschnitt der länglichen Stütze (21) angeordnet ist;
- einen Stromtransformator (50), der in dem hohlen Griffteil (10) angeordnet und elektrisch mit dem elektrischen Induktorkreislauf (30) verbunden ist;
- eine Elektrikerzeugungseinheit (2), die elektrisch mit dem Stromtransformator (50) verbunden und konfiguriert ist, um dem elektrischen Induktorkreislauf (30) einen Wechselstrom durch den Stromtransformator (50) zuzuführen;
- einen Hydraulikkreislauf (3) einer Kühlflüssigkeit (4), wobei der Hydraulikkreislauf Folgendes umfasst:
- einen Kühlabschnitt (7), der innerhalb des Handstücks (1) definiert ist, um den hohlen Griffabschnitt (10) und das zumindest eine Induktorwicklungselement (32) zu kühlen;
- einen gekühlten Abschnitt (6) mit einem Volumen (C), um eine vorbestimmte Menge der Kühlflüssigkeit (4) aufzunehmen;
wobei der gekühlte Abschnitt (6) des Hydraulikkreislaufs (3) eine Vielzahl von parallel angeordneten Zweigen (6₁,6₂,...6ₙ) umfasst, die jeweilige Behälter (60₁,60₂,...60ₙ) beinhalten,
wobei das Volumen (C) in im Wesentlichen gleiche Teile auf die Behälter (60₁,60₂,...60ₙ) aufgeteilt ist,
wobei der Erwärmungsprozess ferner die folgenden Schritte umfasst:
- Definieren (210) einer Maximaltemperatur (Tₘₐₓ) der Kühlflüssigkeit (4);
- Positionieren (221) des Metallkörpers und des zumindest einen Induktorwicklungselements (32) nahe beieinander;
- hydraulisches Verbinden (222) eines Zweiges (6ᵢ) des gekühlten Abschnittes (6) mit dem Kühlabschnitt (7) des Kühlkreislaufs (3), wobei der verbundene Zweig ein aktiver Zweig des gekühlten Abschnittes (6) ist;
- Starten (230) einer geschlossenen Kreislaufförderung der Kühlflüssigkeit zwischen dem aktiven Zweig (6ᵢ) und dem Kühlabschnitt (7) des Kühlkreislaufs (3);
- Starten (240) einer elektrischen Zufuhr des elektrischen Induktorkreislaufs (30), wobei eine Menge an Wärme, die durch elektrische Ströme erzeugt wird, die in den Wicklungen des Transformators (50) und in dem Induktorwicklungselement (32) zirkulieren, und eine Menge an Wärme, die durch den erwärmten Metallkörper auf das Induktorwicklungselement (32) übertragen wird, zumindest teilweise durch die Kühlflüssigkeit (4) entfernt wird, die in dem Kühlabschnitt (7) des Kühlkreislaufs (3) zirkuliert;
um einen Schritt (250) des Erwärmens des Metallkörpers durchzuführen,
wobei in dem Kühlverfahren während des Schrittes des Erwärmens des Metallkörpers in vorbestimmten Zeitintervallen die folgenden Schritte bereitgestellt sind:
- Erfassen (251) eines Temperaturwertes (Tᵢ) der Kühlflüssigkeit (4), die in dem aktiven Zweig (6ᵢ) aufgenommen ist;
- Vergleichen (252) des erfassten Temperaturwertes (Tᵢ) der Kühlflüssigkeit (4) mit der Maximaltemperatur (Tₘₐₓ),
wenn der Temperaturwert (Tᵢ) der Kühlflüssigkeit (4) gleich der oder höher als die Maximaltemperatur (Tₘₐₓ) ist,
- Umschalten (260) des aktiven Zweiges (6ᵢ) auf einen anderen Zweig (6ⱼ), der aus den parallel angeordneten Zweigen des gekühlten Abschnittes (6) des Kreislaufs (3) ausgewählt ist,
wobei auch ein folgender Schritt bereitgestellt ist:
- Prüfen (270) des Vorhandenseins einer Erwärmungsstoppbedingung;
und bei Vorhandensein der Erwärmungsstoppbedingung:
- Unterbrechen (280) der elektrischen Zufuhr (240);
- Bewegen des Metallkörpers und des zumindest einen Induktorwicklungselements (32) weg voneinander.

## Revendications

1. Appareil pour chauffer par induction des corps métalliques, ledit appareil comprenant :
- une pièce à main (1) conçue pour être saisie par un opérateur, ledit pièce à main comprenant :
- une partie de poignée creuse (10) ;
- un support allongé (21) s'étendant à partir de ladite partie de poignée creuse (10) ;
- un circuit d'inducteur électrique (30) comprenant au moins un élément de bobine d'inducteur (32) qui est disposé à une partie d'extrémité dudit support allongé (21) ;
- un transformateur de courant (50) disposé dans ladite partie de poignée creuse (10) et connecté électriquement avec ledit circuit d'inducteur électrique (30) ;
- une unité de génération électrique (2) connectée électriquement audit transformateur de courant (50), et configurée pour fournir un courant alternatif audit circuit d'inducteur électrique (30) par l'intermédiaire dudit transformateur de courant (50) ;
- un circuit hydraulique (3) d'un liquide de refroidissement (4), ledit circuit hydraulique comprenant :
- une partie de refroidissement (7), définie à l'intérieur de ladite pièce à main (1), pour refroidir ladite partie de poignée creuse (10) et ledit au moins un élément de bobine d'inducteur (32) ;
- une partie refroidie (6) ayant un volume (C) pour contenir une quantité prédéterminée dudit liquide de refroidissement (4) ;
**caractérisé en ce que** ladite partie refroidie (6) dudit circuit hydraulique (3) comprend une pluralité de branches disposées en parallèle (6₁, 6₂, ...6ₙ) comprenant des réservoirs respectifs (60₁, 60₂, ...60ₙ),
**en ce que** ledit volume (C) est divisé en parties sensiblement égales parmi lesdits réservoirs (60₁, 60₂, ...60ₙ),
**en ce que** lesdites branches disposées en parallèle (6₁, 6₂, ...6ₙ) comprennent des capteurs de température respectifs (66₁, 66₂, ...66ₙ) configurés pour détecter et notifier des valeurs de température respectives (T₁, T₂, ... Tₙ) dudit liquide de refroidissement (4) contenu dans lesdits réservoirs (60₁, 60₂, ...60ₙ), **et en ce que** ladite partie refroidie (6) dudit circuit hydraulique (3) comprend une unité de vanne de commutation (8) configurée pour mettre sélectivement chacune desdites branches disposées en parallèle (6₁, 6₂, ...6ₙ) de ladite partie refroidie (6) en connexion hydraulique avec ladite partie de refroidissement (7) dudit circuit hydraulique (3),
de manière à alimenter sélectivement ladite partie de refroidissement (7) dudit circuit hydraulique (3) avec ledit liquide de refroidissement (4) provenant d'un réservoir différent (60ⱼ) desdits réservoirs lorsque la température (Tᵢ) dudit liquide de refroidissement (4) fourni par une branche (61ᵢ, i ≠ j) desdites branches disposées en parallèle qui est actuellement en connexion hydraulique avec ladite partie de refroidissement (7) dépasse une température maximale prédéterminée (Tₘₐₓ).

2. Appareil selon la revendication 1, comprenant en outre une unité de contrôle (80) configurée pour :
- détecter un signal de température à partir desdits capteurs de température (661, 662, ...66n), et
- si ledit signal de température indique que ladite température (Tᵢ) dudit liquide de refroidissement (4) fourni par une branche active (61ᵢ) desdites branches disposées en parallèle qui est actuellement en connexion hydraulique avec ladite partie de refroidissement (7) dépasse ladite température maximale (Tₘₐₓ), faire fonctionner ladite unité de vanne de commutation (8) de manière à mettre une branche différente (61ⱼ, j ≠ i) desdites branches disposées en parallèle en connexion hydraulique avec ladite partie de refroidissement (7) dudit circuit hydraulique (3).

3. Appareil selon la revendication 1, dans lequel lesdites branches disposées en parallèle (6₁, 6₂, ...6ₙ) comprennent, en plus desdits réservoirs respectifs (60₁, 60₂, ...60n), des échangeurs de chaleur respectifs (61₁, 61₂, ...61ₙ) pour refroidir ledit liquide de refroidissement (4).

4. Appareil selon la revendication 3, dans lequel chacun desdits réservoirs (60₁, 60₂, ...60ₙ) et chacun desdits échangeurs de chaleur (61₁, 61₂, ...61ₙ) de chaque branche desdites branches disposées en parallèle (60₁, 60₂, ...60ₙ) sont disposés pour maintenir un refroidissement dudit liquide de refroidissement (4) lorsque ladite chaque branche n'est pas en connexion hydraulique avec ladite partie de refroidissement (7) dudit circuit hydraulique (3).

5. Appareil selon la revendication 1, dans lequel lesdites branches disposées en parallèle (6₁, 6₂, ...6ₙ) comprennent, en plus desdits réservoirs respectifs (60₁, 60₂, ...60ₙ), des pompes respectives (65₁, 65₂, ...65ₙ) pour alimenter ladite partie de refroidissement (7) dudit circuit hydraulique (3) avec ledit liquide de refroidissement (4).

6. Appareil selon les revendications 3 à 5, dans lequel
- lesdites branches disposées en parallèle (6₁, 6₂, ...6ₙ) comprennent des conduits de recyclage respectifs entre ladite unité de vanne de commutation (8) et les entrées desdits réservoirs respectifs ;
- lesdits échangeurs de chaleur (61₁, 61₂, ...61ₙ) sont disposés le long desdits conduits de recyclage respectifs, en particulier lesdits échangeurs de chaleur (61₁, 61₂, ...61ₙ) sont des échangeurs de chaleur à air forcé.

7. Appareil selon les revendications 2 et 6, dans lequel ladite unité de contrôle (80), lorsque ledit signal de température (81ᵢ) indique que ladite température (Tᵢ) dudit liquide de refroidissement (4) fourni par ladite branche active (61ᵢ) desdites branches disposées en parallèle dépasse ladite température maximale (Tₘₐₓ), est en outre configurée pour faire fonctionner ladite unité de vanne de commutation (8) de manière à mettre une desdites pompes (65₁, 65₂, ...65ₙ) de ladite branche active (6ᵢ) en connexion hydraulique avec ledit conduit de recyclage, et pour maintenir un refroidissement dudit liquide de refroidissement (4) de chacune desdites branches lorsque chacune desdites branches disposées en parallèle (6₁, 6₂, ...6ₙ) n'est pas en connexion hydraulique avec ladite partie de refroidissement (7) dudit circuit hydraulique (3).

8. Appareil selon la revendication 1, dans lequel ladite partie de refroidissement (7) dudit circuit hydraulique (3) comprend en outre un élément d'échange de chaleur (71) de ladite unité de génération électrique (2), en particulier, pour maintenir la température d'un pont IGBT de ladite unité de génération électrique (2) en dessous d'une valeur de température prédéterminée.

9. Méthode de refroidissement pour refroidir un appareil pour effectuer un processus de chauffage par induction d'un corps métallique, ledit processus comprenant une étape (200) de prédisposition d'un appareil comprenant :
- une pièce à main (1) conçue pour être saisie par un opérateur, ledit pièce à main comprenant :
- une partie de poignée creuse (10) ;
- un support allongé (21) s'étendant à partir de ladite partie de poignée creuse (10) ;
- un circuit d'inducteur électrique (30) comprenant au moins un élément de bobinage d'inducteur (32) disposé à une partie d'extrémité dudit support allongé (21) ;
- un transformateur de courant (50) disposé dans ladite partie de poignée creuse (10) et connecté électriquement avec ledit circuit d'inducteur électrique (30) ;
- une unité de génération électrique (2) connectée électriquement audit transformateur de courant (50), et configurée pour fournir un courant alternatif audit circuit d'inducteur électrique (30) par l'intermédiaire dudit transformateur de courant (50) ;
- un circuit hydraulique (3) d'un liquide de refroidissement (4), ledit circuit hydraulique comprenant :
- une partie de refroidissement (7), définie à l'intérieur de ladite pièce à main (1), pour refroidir ladite partie de poignée creuse (10) et ledit au moins un élément de bobinage d'inducteur (32) ;
- une partie refroidie (6) ayant un volume (C) pour contenir une quantité prédéterminée dudit liquide de refroidissement (4) ;
dans lequel ladite partie refroidie (6) dudit circuit hydraulique (3) comprend une pluralité de branches disposées en parallèle (6₁, 6₂, ...6ₙ), comprenant des réservoirs respectifs (60₁, 60₂, ...60ₙ),
dans lequel ledit volume (C) est divisé en parties sensiblement égales parmi lesdits réservoirs (60₁, 60₂, ...60ₙ),
ledit processus de chauffage comprenant en outre les étapes suivantes :
- définir (210) une température maximale (Tₘₐₓ) dudit liquide de refroidissement (4) ;
- positionner (221) ledit corps métallique et ledit au moins un élément de bobinage d'inducteur (32) à proximité l'un de l'autre ;
- connecter hydrauliquement (222) une branche (6i) de ladite partie refroidie (6) avec ladite partie de refroidissement (7) dudit circuit de refroidissement (3), ladite branche connectée étant une branche active de ladite partie refroidie (6) ;
- démarrer (230) une circulation en circuit fermé dudit liquide de refroidissement entre ladite branche active (6i) et ladite partie de refroidissement (7) dudit circuit de refroidissement (3) ;
- démarrer (240) une alimentation électrique dudit circuit d'inducteur électrique (30), dans laquelle une quantité de chaleur générée par les courants électriques circulant dans les enroulements dudit transformateur (50) et dans ledit élément de bobinage d'inducteur (32), et une quantité de chaleur transférée par ledit corps métallique chauffé audit élément de bobinage d'inducteur (32) est au moins partiellement éliminée par ledit liquide de refroidissement (4) circulant dans ladite partie de refroidissement (7) dudit circuit de refroidissement (3) ;
de manière à effectuer une étape (250) de chauffage dudit corps métallique, dans ladite méthode de refroidissement, pendant ladite étape de chauffage dudit corps métallique, à des intervalles de temps prédéterminés, les étapes suivantes étant prévues :
- détecter (251) une valeur de température (Tᵢ) dudit liquide de refroidissement (4) contenu dans ladite branche active (6ᵢ) ;
- comparer (252) ladite valeur de température détectée (Tᵢ) dudit liquide de refroidissement (4) avec ladite température maximale (Tₘₐₓ) ;
si ladite valeur de température (Tᵢ) dudit liquide de refroidissement (4) est égale ou supérieure à ladite température maximale (Tₘₐₓ),
- commuter (260) ladite branche active (6ᵢ) vers une branche différente (6ⱼ) sélectionnée parmi lesdites branches disposées en parallèle de ladite partie refroidie (6) dudit circuit (3),
dans laquelle l'étape suivante est également prévue
- vérifier (270) la présence d'une condition d'arrêt de chauffage ;
et, en présence de ladite condition d'arrêt de chauffage,
- interrompre (280) ladite alimentation électrique (240) ;
- éloigner ledit corps métallique et ledit au moins un élément de bobinage d'inducteur (32) l'un de l'autre.
